# EUROPEAN PATENT SPECIFICATION

(11) **EP 4 525 111 B1**
(45) Date of publication and mention of the grant of the patent: **25.11.2026**
(21) Application number: 23863502.3
(22) Date of filing: 06.09.2023
(51) Int. Cl.: H01M 10/04, H01M 50/557, H01M 50/548, H02J 7/00, H01M 10/44, H02J 7/70

(54) **SYSTEM FOR PRESSING AND CHARGING/DISCHARGING BATTERY CELL**
SYSTEM ZUM PRESSEN UND LADEN/ENTLADEN EINER BATTERIEZELLE
SYSTÈME POUR PRESSER ET CHARGER/DÉCHARGER UNE CELLULE DE BATTERIE

(30) Priority: 08.09.2022 KR 20220113937
(43) Date of publication of application: 19.03.2025
(73) Proprietor: LG Energy Solution, Ltd., Seoul 07335 (KR)
(72) Inventor: HONG, Sukhyun, Daejeon 34122 (KR)
(74) Representative: Goddar, Heinz J.
(86) International application number: PCT/KR2023/013345
(87) International publication number: WO 2024/054036

(56) References cited:
- KR-A- 20170 100 994
- KR-A- 20210 051 281
- KR-A- 20220 101 269
- KR-B1- 101 949 687
- KR-B1- 101 949 687
- KR-B1- 102 290 736

## Description

### [Technical Field]

The present application claims the benefit of and priority to Korean Patent Application No. 10-2022-0113937, filed September 8, 2022.

The present invention relates to a battery cell pressurization and charging/discharging system, and more particularly, to a battery cell pressurization and charging/discharging system in which a battery cell can be pressurized and charged/discharged without changing its inner frame, even if the size of the battery cell is changed.

### [Related Art]

In recent years, as energy prices have risen due to the depletion of fossil fuels and environmental pollution has increased, there has been a growing need for environmentally friendly alternative energy sources. As a result, various power generation technologies such as nuclear, wind, tidal, and solar are being researched, and there is a growing interest in power storage to use the energy generated more efficiently.

In particular, the demand for batteries as an energy source is increasing rapidly as technology development and demand for medium and large-scale applications such as electric vehicles and energy storage systems (ESS) increases, and research is being conducted on batteries that can meet various needs.

For example, in terms of battery shape, there is a high demand for prismatic batteries and pouch batteries with thin thickness, and in terms of materials, there is a high demand for lithium secondary batteries such as lithium-ion batteries, lithium-ion polymer batteries, and lithium all-solid-state batteries, which have advantages such as high energy density, discharge voltage, and output stability.

Such a secondary battery has an electrode assembly comprising an anode, a cathode, a separator disposed therebetween, and an electrolyte embedded inside a battery case, with anode and cathode tabs welded to two electrode tabs and sealed to be exposed to the outside of the battery case. These electrode tabs are electrically connected to an external device by contact, and the battery can supply power to or receive power from the external device through the electrode tabs.

In one aspect, the secondary battery may be fabricated by accommodating the electrode assembly into the battery case and injecting electrolyte, followed by an activation step to activate the battery. The activation step may comprise mounting the secondary battery to the frame in a charge and discharge device and then charging/discharging the secondary battery under pressure to the conditions required for activation.

If the size of the electrode assembly changes, the frame must be reused to fit the new size. As a result, the time and cost of fabricating the secondary battery is wasted. Therefore, research is being conducted to solve these problems. A system for pressurizing and charging/discharging a battery cell with the features of the preamble of claim 1 is disclosed by KR 101 949 687 B1.

### [Detailed Description of the Invention]

### [Technical Problem]

It is an object of the present invention to provide a battery cell pressurization and charging/discharging system in which pressurization and charging/discharging can be performed using the same frame even when the size of the electrode assembly changes.

Furthermore, it is an object of the present invention to provide a battery cell pressurization and charging/discharging system that allows for the use of a battery cell for capacity testing, rather than the use of a battery cell dedicated to charging/discharging.

### [Technical Solution]

To accomplish the aforementioned objectives of the present invention, a battery cell pressurization and charge/discharge system according to one embodiment of the present invention comprises: an inner frame into which a battery cell is loaded; a plate for pressurizing the battery cell; a pressurizing block movable on the plate in a direction in which the plate extends, and gripping the battery cell; and an outer frame disposed outside the inner frame, and having an inner tab electrically connected with the pressurizing block by wiring.

In one embodiment, the pressurizing block may comprise a circuit board disposed in a portion in contact with the battery cell.

In one embodiment, the system may further comprise a load cell disposed within the inner frame and capable of measuring a pressure exerted on the battery cell.

In one embodiment, the system may further comprise a pressurizing shaft for pressurizing the plate, wherein the pressurizing shaft pressurizes the plate by rotation.

In one embodiment, the rotation may be a screw rotation.

In one embodiment, the pressurizing block may grip a tab of the battery cell.

In one embodiment, the battery cell may be a bilateral tabbed battery cell with tabs provided at both ends.

In one embodiment, the battery cell may be a unidirectionally tabbed battery cell having a tab provided at one end only.

In one embodiment, two or more pressurizing blocks may be disposed on the one plate.

In one embodiment, the system may further comprise: a transfer device to transfer the outer frame; and a charging/discharging device into which the transferred outer frame is placed, wherein the charging/discharging device has an outer tab electrically connected with the inner tab, and wherein a current applied by the charging device is transferred to the battery cell via the outer tab, the inner tab, and the pressurizing block.

In one embodiment, the outer tab may be a tab gripper that grips and electrically connects the inner tab.

The wiring connects the inner tab and the pressurizing block in a form of a spring.

### [Advantageous Effects]

According to the present invention, a battery cell pressurization and charging/discharging system can pressurize battery cells of various sizes without changing the inner frame, by having pressurizing blocks movable on the plate gripping the tabs of the battery cells, regardless of the size of the battery cells.

Wiring disposed in the form of a spring may be elongated. Accordingly, the inner tabs may be connected to the pressurizing blocks by wiring that stretches in length while remaining fixed in position within the outer frame. If the pressurizing block is moved, the position of the inner tabs may not change, but only the length of the wiring may increase or decrease. The outer tab may be fixedly disposed in a position corresponding to the inner tabs within the outer frame.

Thus, the battery cell pressurization and charging/discharging system can use the same inner frame, outer frame, and charging/discharging device regardless of the size of the battery cells. Accordingly, the battery cell pressurization and charging/discharging system can save time and money compared to conventional pressurization and charging/discharging systems that require replacing the frame whenever the size of the battery cell changes.

### [Brief Description of Drawings]

FIG. 1 is a block diagram schematically illustrating a battery cell pressurization and charging/discharging system according to one embodiment of the present invention.
FIG. 2 is a drawing illustrating one embodiment of the pressurizing tray of FIG. 1.
FIG. 3 is a drawing of a pressurized state of battery cell placed inside the pressurizing tray of FIG. 1.
FIGS. 4a to 4c are drawings illustrating one embodiment of a pressurizing block included in the pressurizing tray of FIG. 1.
FIG. 5 is a drawing illustrating a cell battery pressurization and charging/discharging system according to one embodiment of the present invention.
FIG. 6 is a drawing illustrating a pressurizing tray according to one embodiment of the present invention.
FIG. 7 is a drawing illustrating a pressurizing tray according to one embodiment of the present invention.
FIGS. 8a to 8c are drawings illustrating one embodiment of a pressurizing block included in the pressurizing tray of FIG. 7.

### [Best Mode for Practicing the Invention]

Hereinafter, preferred embodiments of the present invention will be described in detail with reference to the accompanying drawings. It should be noted that the terms and words used in this specification and claims are not to be construed in their ordinary or dictionary sense, but rather in a sense and concept consistent with the technical idea of the present invention, based on the principle that the inventor may properly define the concept of a term to best describe his invention. Accordingly, it is to be understood that the embodiments described in the specification and the configurations illustrated in the drawings are only some of the most preferred embodiments of the present invention as defined by the claims.

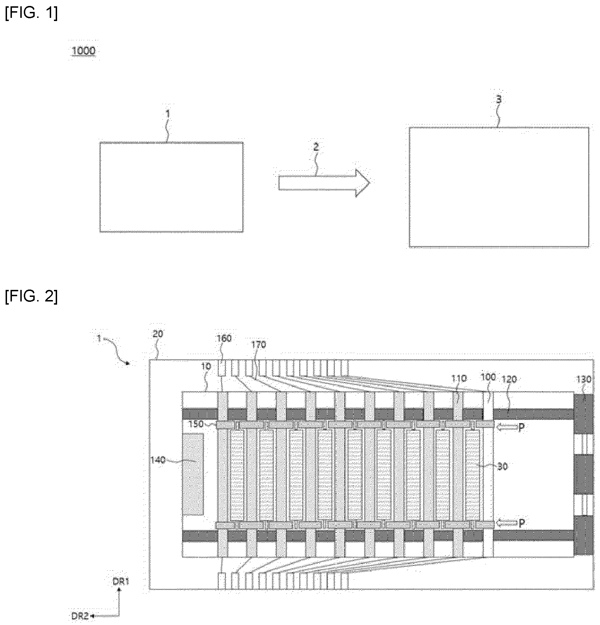

FIG. 1 is a block diagram schematically illustrating a battery cell pressurization and charging/discharging system according to one embodiment of the present invention.

Referring to FIG. 1, a battery cell pressurization and charging/discharging system 1000 may include a pressurizing tray 1, a transfer device 2, and a charging/discharging device 3. The pressurizing tray 1 may pressurize battery cells. For this purpose, the pressurizing tray 1 may be loaded with the battery cells. The charging/discharging device 3 may charge and discharge the battery cells placed in the pressurizing tray 1. The process of charging/discharging the battery cells may be defined as an activation process that activates the battery cells. During the activation process, the battery cell may expand due to a change in the thickness of the electrode plate or gas generation. The battery cell pressurization and charging/discharging system 1000 allows the charging/discharging device 3 to charge the battery cell while the pressurizing tray 1 pressurizes the battery cell to prevent the battery cells from expanding.

The pressurizing tray 1 containing the battery cells may be transferred to the charging/discharging device 3 by the transfer device 2. The transfer device 2 can be used in various ways, as long as it is capable of transferring the pressurizing tray 1 to the charging/discharging device 3. The transfer device 2 may comprise a conveyor belt, a crane, or the like. As a crane, a stacker crane may be used. For example, in the pressurizing stage, the battery cells may be loaded into the pressurizing tray 1. The pressurizing tray 1 can be moved to the charging/discharging device 3 via a conveyor belt while pressurizing the loaded battery cells. A stacker crane may then load the pressurizing tray 1 into the charging/discharging device 3.

The pressurizing tray 1 may be introduced into the charging/discharging device 3 by the transfer device 2 so as to be electrically connected to the charging/discharging device 3. The charging/discharging device 3 may apply a current to the pressurizing tray 1.

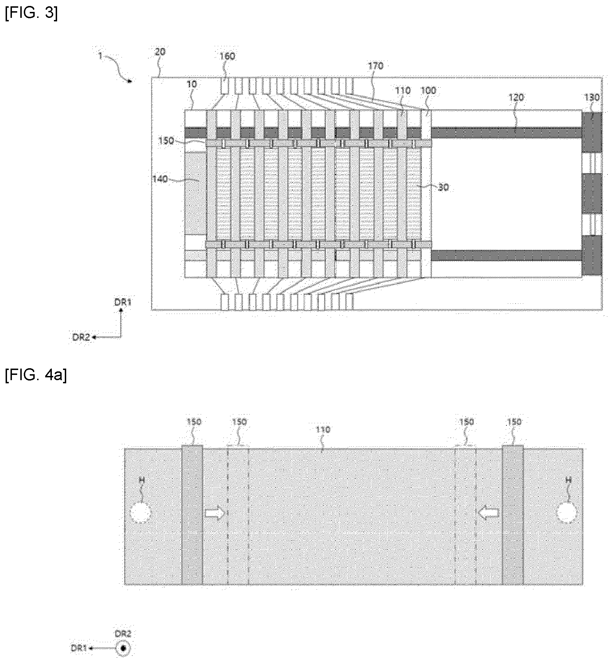

FIG. 2 is a drawing illustrating one embodiment of the pressurizing tray of FIG. 1, and FIG. 3 is a drawing illustrating battery cells pressurized inside the pressurizing tray of FIG. 1.

Referring to FIG. 2, the pressurizing tray 1 includes an inner frame 10, an outer frame 20, battery cells 30, plates, , pressurizing blocks 150, inner tabs 160, and wiring 170 and may include pressurizing shafts 120, a pressurizing adjustment member 130, and a load cell 140. The plates may include a main plate 100 and sub-plates 110.

The inner frame 10 may provide a space in which the battery cells 30 are housed. The inner frame 10 may be made of rigid materials to accommodate and secure the battery cells 30. The inner frame 10 may be loaded with the battery cells 30. The battery cells 30 may be activated by pressurizing and charging/discharging the battery cells 30 after they are inserted into the inner frame 10. At least one battery cell 30 may be introduced.

The main plate 100 and the sub-plates 110 may pressurize the battery cells 30. To this end, the main plate 100 may have a plate-like structure. The main plate 100 may extend in a first direction DR1. The main plate 100 may pressurize in a second direction DR2 perpendicular to the first direction DR1. To accomplish this, the main plate 100 may be made of a material with high mechanical stiffness that does not deform under high heat and pressure. For example, the main plate 100 may be constructed of a metallic material. Of course, the main plate 100 may be made of a material other than metal, such as aluminum, stainless steel, reinforced plastic, reinforced ceramic, or reinforced glass, as long as the material has good mechanical rigidity. When the main plate 100 is pressed in the second direction DR2, the sub-plates 110 may be pushed sequentially in the second direction DR2.

The main plate 100 and the sub-plates 110 may have slip sheets secured between them. The slip sheets may be pinned to the top of the main plate 100 and the sub-plates 110 and may serve to hold the battery cells before the battery cells are pressurized. The slip sheets may have a length that is less than the size of the battery cells. Preferably, the slip sheets are disposed at a length that covers the bodies of the battery cells. If the tabs of the battery cells are covered by the slip sheets, the pressurizing blocks 150 cannot be electrically connected to the tabs of the battery cells. Each of the slip sheets may comprise a flame retardant coated paper or film.

As shown in FIG. 3, a plurality of battery cells 30 along with the main plate 100 and sub-plates 110 may be disposed in the inner frame 10, with the main plate 100 and sub-plates 110 positioned adjacent to each of the plurality of battery cells 30. Each of the battery cells 30 may be pressurized by the adjacent main plate 100 and the sub-plates 110.

The pressurizing shafts 120 and the pressurizing adjustment member 130 can pressurize the main plate 100. The pressurizing adjustment member 130 can rotate each of the pressurizing shafts 120 by rotating a gear. For example, each of the pressurizing shafts 120 can pressurize the main plate 100 by rotating a screw. The pressure exerted on the main plate 100 can be transmitted to the sub-plates 110, whereby the plurality of battery cells 30 can be pressurized together. Each of the pressurizing shafts 120 may have threads, and the sub-plates 110 may be in contact with the threads by bearings or the like. This allows the sub-plates 110 to be moved in the second direction DR2 by rotation of the screw on each of the pressurizing shafts 120. Although not shown, a mounting shaft for mounting the main plate 100 and the sub-plates 110 may be added.

The load cell 140 may measure the pressure applied to the battery cells 30. The load cell 140 may be disposed within the inner frame 10 in a direction in which the pressurizing shafts 120 apply pressure. As shown in FIG. 3, when pressure is applied by the pressurizing shafts 120, the load cell 140 may be in contact with one of the sub-plates 110, and the sub-plate 110 may apply pressure to the load cell 140. The load cell 140 can generate a signal to stop pressurizing if pressure is applied above a preset pressure. For example, the load cell 140 can generate a signal to stop pressurization if a pressure greater than 3000 kgf is applied. In doing so, the pressurizing tray 1 can prevent the battery cell 30 from being damaged by excessive pressure being applied to the battery cell 30. The load cell 140 is electrically connected and operable only during the pressurization stage, and not during the charging/discharging process.

The pressurizing blocks 150 may be disposed on the main plate 100 and the sub-plates 110. The pressurizing blocks 150 may move on the main plate 100 and the sub-plates 110 in a direction in which the main plate 100 and the sub-plates 110 extend, *i.e.,* the pressurizing blocks 150 may move in the first direction DR1. Accordingly, even if the length of each of the battery cells 30 in the first direction DR1 changes, the inner frame 10 can be moved to grip the battery cells 30 with different lengths by moving only the pressurizing blocks 150 without having to change the inner frame 10. Each of the pressurizing blocks 150 may be electrically connected to the wiring 170.

There may be two or more pressurizing blocks 150 on the main plate 100 and the sub-plates 110. The pressurizing blocks 150 may be in contact with tabs on the battery cells 30. The battery cells 30 illustrated in FIGS. 2 and 3 may be defined as bilateral tabbed battery cells each with tabs located at both ends. The pressurizing blocks 150 may each be in contact with a tab located at one of both ends of the battery cell 30. In this case, the pressurizing blocks 150 may include a circuit board disposed in contact with the corresponding battery cell 30. The circuit board may be a printed circuit board. Through the circuit board, the pressurizing blocks 150 may be electrically connected to the battery cells 30.

The inner tabs 160 may be disposed on an inner side of the outer frame 20. The inner tabs 160 may be connected to the pressurizing blocks 150 by the wiring 170. Accordingly, signals communicated to the inner tabs 160 from the outside may be communicated to the pressurizing blocks 150 via the wiring 170. The wiring 170 is provided in a form of a spring to facilitate length variation. Accordingly, the wiring 170 may not be disconnected when the main plate 100 and sub-plates 110 are moved in the second direction DR2. If the wiring 170 has a fixed length, the wiring 170 may be disconnected from the pressurizing blocks 150 as the main plate 100 and the sub-plates 110 move. Thereafter, signals communicated to the main plate 100 may be communicated to the battery cell 30 via the pressurizing block 150. In other words, the inner tab 160, the wiring 170, the pressurizing block 150, and the battery cell 30 may be electrically connected.

FIGS. 4a to 4c are drawings illustrating one embodiment of a pressurizing block included in the pressurizing tray of FIG. 1.

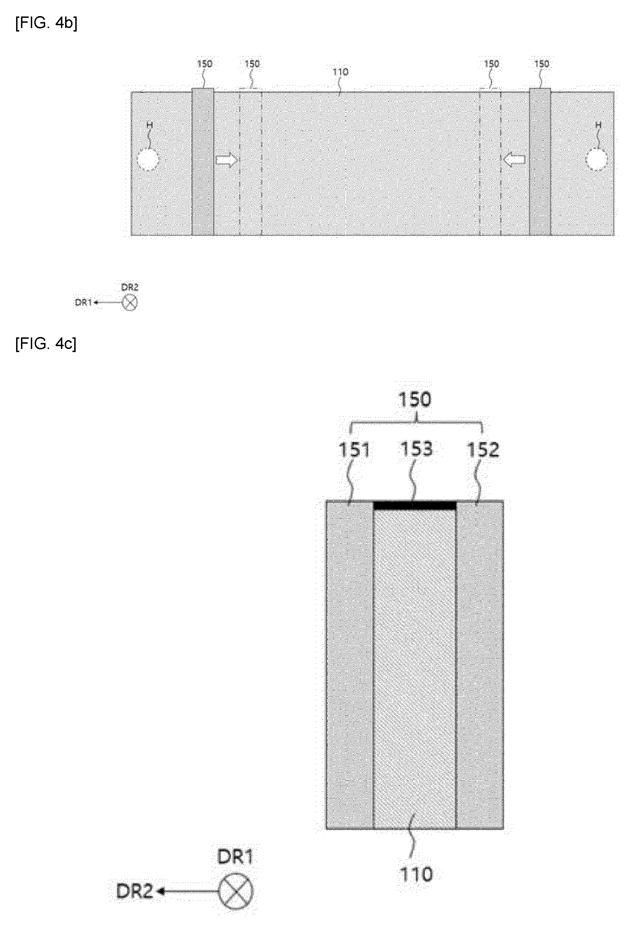

FIG. 4a is a view of a sub-plate 110 from a second direction DR2, and FIG. 4b is a view of the sub-plate 110 from a direction opposite to the second direction DR2. Referring to FIG. 4a, holes H may be formed at both ends of the sub-plate 110. Pressurizing shafts 120 as described above may be disposed through the holes H. Pressurizing blocks 150 may be disposed on the sub-plate 110. Each of the pressurizing blocks 150 may move on the sub-plates 110 in the first direction DR1 and in a direction opposite to the first direction DR1. This allows each of the pressurizing blocks 150 to move to contact the tab of the battery cell even when the length of the battery cell in the first direction DR1 changes.

FIG. 4c is a side view of the sub-plate 110. The pressurizing block 150 may include a first sub-pressurizing block 151, a second sub-pressurizing block 152, and a connecting member 153. The first sub-pressurizing block 151 and the second sub-pressurizing block 152 may be connected by the connecting member 153. As such, the pressurizing blocks 150 may be disposed on the sub-plates 110 with the plurality of members connected, and may move in the first direction DR1 and in a direction opposite to the first direction DR1.

The first sub-pressurizing block 151 may include a coil spring. Accordingly, the first sub-pressurizing block 151 may be compressed when the tabs of the battery cells are pressed. A circuit board may be disposed in the second sub-pressurizing block 152. At this time, the second sub-pressurizing block 152 may be connected with the wiring 170 described in FIGS. 2 and 3. Accordingly, the pressurizing block 150 may be electrically connected to the tabs of the battery cell via the second sub-pressurizing block 152. However, while this is exemplary, it is also possible that a circuit board is disposed in the first sub-pressurizing block 151 and that the second sub-pressurizing block 152 comprises a spring.

While FIGS. 4a to 4c have been described with reference to the sub-plates 110, the same can be applied to the main plate 100.

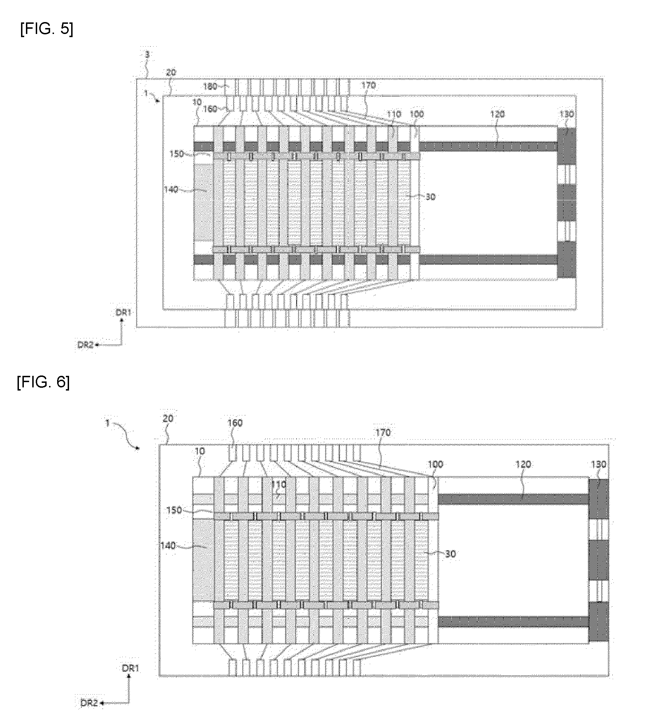

FIG. 5 is a drawing illustrating a cell battery pressurization and charging/discharging system according to one embodiment of the present invention.

Referring to FIGS. 1 and 5, the pressurizing tray 1, which is introduced into the charging/discharging device 3 by the transfer device 2, may be electrically connected to the charging/discharging device 3.

The charging/discharging device 3 may include outer tabs 180 disposed internally, and the outer tabs 180 may have a form of grippers. Accordingly, the outer tabs 180 may be defined as tab grippers. The outer tabs 180 may contact the inner tabs 160 by gripping the inner tabs 160, and may be electrically connected to the inner tabs 160. Alternatively, the outer tabs 180 and the inner tabs 160 may include a conductive material internally and may be electrically connected by contacting each other. Alternatively, the outer tabs 180 and the inner tabs 160 may each include a circuit board at an end thereof, and may be electrically connected to each other by contacting the respective ends. As such, the charging/discharging device 3 may provide currents through the outer tabs 180 to the inner tabs 160. The current may be delivered to the battery cells 30 and serve to charge and discharge the battery cells 30.

The wiring 170, which is provided in the form of springs, may be elongated. Accordingly, the inner tabs 160 may be connected to the pressurizing blocks 150 by the wiring 170 with fixed positions within the outer frame 20. When the main plate 100 and sub-plates 110 are moved in the second direction DR2, the positions of the inner tabs 160 may not change and only the length of the wiring 170 may increase or decrease. The outer tabs 180 may be fixedly disposed in positions corresponding to the inner tabs 160 within the outer frame 20. That is, the positions of the inner tabs 160 and the outer tab 180 are each fixed.

Furthermore, a change in the length of the battery cells 30 in the first direction DR1 does not require replacement of the inner frame 10 because the pressurizing blocks 150 can be moved in the first direction DR1 on the main plate 100 and the sub-plates 110 to grip the tabs of the battery cells 30. Thus, the battery cell pressurization and charging/discharging system 1000 according to one embodiment can use the same inner frame 10, outer frame 20, and charging/discharging device 3 regardless of the size of the battery cells 30. Accordingly, the battery cell pressurization and charging/discharging system 1000 according to one embodiment can save time and money compared to conventional pressurization and charging/discharging systems that require replacing the frame whenever the size of the battery cell 30 changes.

FIG. 6 is a drawing illustrating a pressurizing tray according to one embodiment of the present invention. FIG. 6 may be substantially identical to FIG. 1, except that the lengths of the first direction DR1 of the battery cells 30 are reduced. Accordingly, a description of the duplicate configuration will be omitted.

Referring to FIGS. 1 and 6, the pressurizing blocks 150 may move on the main plate 100 and the sub-plates 110 to conform to the lengths of the battery cell 30s when the lengths of the battery cells 30 change. After traveling, the pressurizing blocks 150 can grip the tabs of the battery cells 30. The pressurizing blocks 150 may be electrically connected to the battery cells 30 by gripping the tabs of the battery cells 30. A circuit board may be disposed at the portion where each of the pressurizing blocks 150 grips the tabs of the battery cells 30. The circuit board may be a printed circuit board.

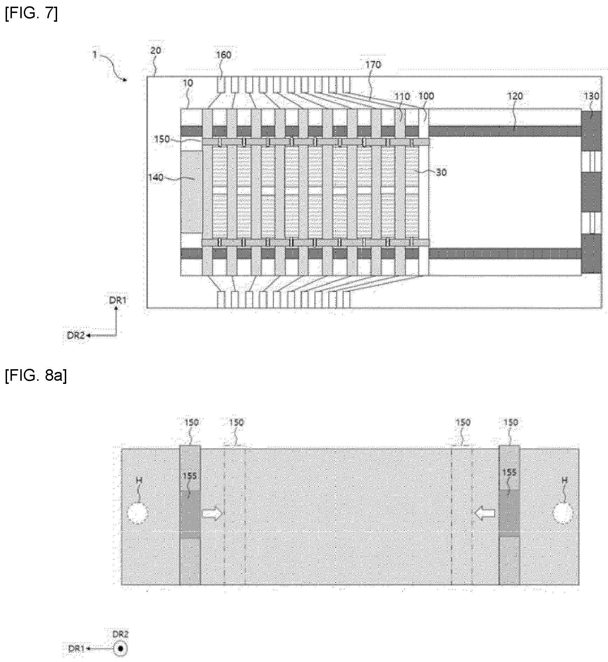

FIG. 7 is a drawing illustrating a pressurizing tray according to one embodiment of the present invention. FIG. 7 may be substantially identical to FIG. 1, except that the battery cells 30 have been changed to unilateral tabbed battery cells. Accordingly, a description of the duplicate configuration will be omitted.

Referring to FIGS. 1 and 7, the battery cells 30 may be unidirectional tabbed battery cells rather than bidirectional tabbed battery cells. A unidirectional tabbed battery cell may be defined as a battery cell in which the tabs are located on only one side of the battery cell. In this case, battery cells 30 may have tabs located on one end only. The pressurizing blocks 150, which are movable on the main plate 100, may each be in contact with different battery cells 30.

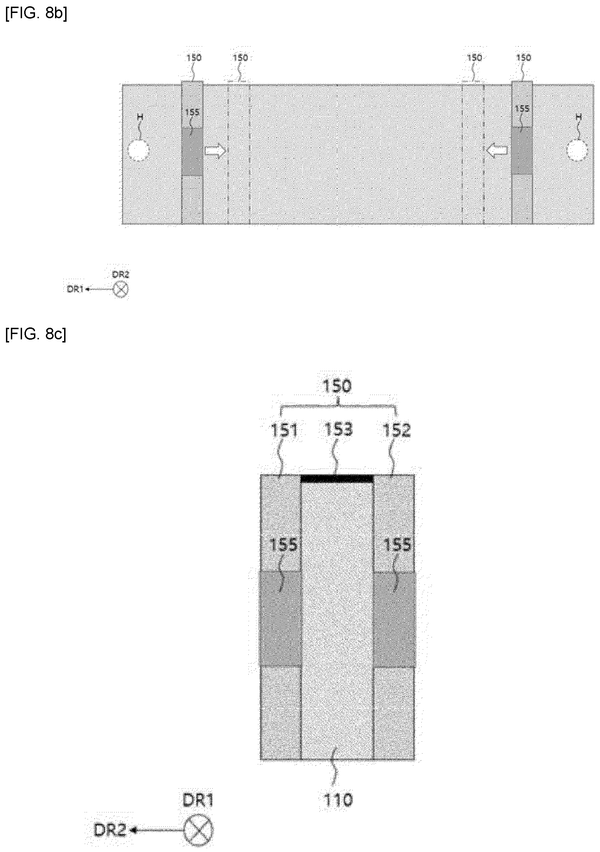

For example, a pressurizing block 150 positioned at an end of the first direction DR1 of one sub-plate 110 contacts a battery cell 30 positioned in the first direction DR1 of the battery cells 30 positioned adjacent to the sub-plate 110, and a pressurizing block 150 positioned in a direction opposite to the first direction DR1 may contact the battery cells 30 positioned in a direction opposite to the first direction DR1 among the battery cells 30 positioned adjacent to the sub-plate 110. In this case, the structure of the pressurizing blocks 150 may be somewhat different from that described above, since the unidirectional tabbed battery cell may have two tabs on one side only. This will be described with reference to FIGS. 8a to 8c.

FIGS. 8a to 8c are drawings illustrating one embodiment of a pressurizing block included in the pressurizing tray of FIG. 7. FIGS. 8a to 8c may be substantially the same as FIGS. 4a to 4c, except for the addition of the insulating member 155. Accordingly, a description of overlapping configurations will be omitted.

Referring to FIGS. 8a to 8c, the insulating member 155 may be disposed between the first sub-pressurizing block 151 and the second sub-pressurizing block 152. The insulating member 155 may also be disposed in only one of the first sub-pressurizing block 151 and the second sub-pressurizing block 152. For example, if a circuit board is disposed in the first sub-pressurizing block 151, the insulating member 155 may be disposed only on the first sub-pressurizing block 151 side. Conversely, if the circuit board is disposed in the second sub-pressurizing block 152, the insulating member 155 can be disposed only on the second sub-pressurizing block 152 side.

The insulating member 155 may serve to insulate the circuit boards disposed at the top and bottom of the sub-pressurizing block where the circuit boards are disposed. Thus, an upper portion of the sub-pressurizing block in which the circuit board is disposed may contact a tab of one of the two tabs of the battery cell, and a lower portion of the sub-pressurizing block may contact a tab of the other of the two tabs of the battery cell.

In this case, a plurality of wirings 170 shown in FIG. 7 may be provided and connected to the top and bottom of the sub-pressurizing block, respectively.

Although the present invention has been described in detail above with respect to preferred embodiments of the present invention, the scope of the present invention is not limited thereto, and various modifications and improvements of those skilled in the art utilizing the basic concepts of the present invention as defined in the following claims are also within the scope of the present invention, which is defined by the claims.

### [Explanation of symbols]

1: Pressurizing tray
2: Transfer device
3: Charging/discharging device
10: Inner Frame
20: Outer Frame
30: Battery cell
100: Main plate
110: Sub-plate
120: pressurizing shaft
130: pressurizing adjustment member
140: Load Cell
150: pressurizing block
160: Inner tabs
170: Wiring
180: Outer Tabs
151: First sub-pressurizing block
152: Second sub-pressurizing block
153: Connecting member
155: Insulating member

## Claims

1. A system (1000) for pressurizing and charging/discharging a battery cell (30, 30s), comprising:
an inner frame (10) into which a battery cell (30, 30s) is loaded; and
a plate (100, 110) for pressurizing the battery cell (30, 30s), **characterized in that** the system (1000) further comprises
a pressurizing block (150) movable on the plate (100, 110) in a direction in which the plate (100, 110) extends, and gripping the battery cell (30, 30s); and
an outer frame (20) disposed outside the inner frame (10), and having an inner tab (160) electrically connected with the pressurizing block (150) by wiring and wherein the wiring (170) connects the inner tab (160) to the pressurizing block (150) in a form of a spring.

2. The battery cell pressurization and charging/discharging system (1000) of claim 1, wherein the pressurizing block (150) comprises a circuit board disposed in a portion in contact with the battery cell (30, 30s).

3. The battery cell pressurization and charging/discharging system (1000) of claim 1, further comprising a load cell (140) disposed within the inner frame (10) and capable of measuring a pressure exerted on the battery cell (30, 30s).

4. The battery cell pressurization and charging/discharging system (1000) of claim 1, further comprising a pressurizing shaft (120) for pressurizing the plate (100, 110), wherein the pressurizing shaft (120) pressurizes the plate (100, 110) by rotation.

5. The battery cell pressurization and charging/discharging system (1000) of claim 4, wherein the rotation is a screw rotation.

6. The battery cell pressurization and charging/discharging system (1000) of claim 1, wherein the pressurizing block (150) grips the tab (160, 180) of the battery cell (30, 30s).

7. The battery cell pressurization and charging/discharging system (1000) of claim 6, wherein the battery cell (30, 30s) is a bilateral tabbed battery cell with tabs (160, 180) provided at both ends.

8. The battery cell pressurization and charging/discharging system (1000) of claim 6, wherein the battery cell (30, 30s) is a unidirectionally tabbed battery cell (30, 30s) having a tab (160, 180) provided at one end only.

9. The battery cell pressurization and charging/discharging system (1000) of claim 6, wherein two or more pressurizing blocks (150-152) are disposed on the one plate (100, 110).

10. The battery cell pressurization and charging/discharging system (1000) of claim 1, further comprising:
a transfer device to transfer the outer frame (20); and
a charging/discharging device into which the transferred outer frame (20) is placed,
wherein the charging/discharging device has an outer tab (180) electrically connected with the inner tab (160), and
wherein a current applied by the charging/discharging device is transferred to the battery cell (30, 30s) via the outer tab (180), the inner tab (160), and the pressurizing block (150).

11. The battery cell pressurization and charging/discharging system (1000) of claim 10, wherein the outer tab (180) is a tab gripper that grips and electrically connects the inner tab (160).

## Patentansprüche

1. System (1000) zum Druckbeaufschlagen und Laden/Entladen einer Batteriezelle (30, 30s), umfassend:
einen Innenrahmen (10), der dazu eingerichtet ist, eine Batteriezelle (30, 30s) aufzunehmen; und
eine Platte (100, 110) zum Druckbeaufschlagen der Batteriezelle (30, 30s),
**dadurch gekennzeichnet, dass** das System (1000) ferner umfasst:
einen Druckbeaufschlagungsblock (150), der auf der Platte (100, 110) in einer Richtung bewegbar ist, in der sich die Platte (100, 110) erstreckt, und der dazu ausgebildet ist, die Batteriezelle (30, 30s) zu greifen; und
einen Außenrahmen (20), der außerhalb des Innenrahmens (10) angeordnet ist und eine innere Anschlusslasche (160) aufweist, die durch eine Verdrahtung elektrisch mit dem Druckbeaufschlagungsblock (150) verbunden ist,
wobei die Verdrahtung (170) die innere Anschlusslasche (160) mit dem Druckbeaufschlagungsblock (150) in Form einer Feder verbindet.

2. System (1000) zum Druckbeaufschlagen und Laden/Entladen einer Batteriezelle nach Anspruch 1, wobei der Druckbeaufschlagungsblock (150) eine Leiterplatte umfasst, die in einem Abschnitt angeordnet ist, der mit der Batteriezelle (30, 30s) in Kontakt steht.

3. System (1000) zum Druckbeaufschlagen und Laden/Entladen einer Batteriezelle nach Anspruch 1, ferner umfassend eine Kraftmesszelle (140), die innerhalb des Innenrahmens (10) angeordnet ist und dazu eingerichtet ist, einen auf die Batteriezelle (30, 30s) ausgeübten Druck zu messen.

4. System (1000) zum Druckbeaufschlagen und Laden/Entladen einer Batteriezelle nach Anspruch 1, ferner umfassend eine Druckbeaufschlagungswelle (120) zum Druckbeaufschlagen der Platte (100, 110), wobei die Druckbeaufschlagungswelle (120) die Platte (100, 110) durch Rotation druckbeaufschlagt.

5. System (1000) zum Druckbeaufschlagen und Laden/Entladen einer Batteriezelle nach Anspruch 4, wobei die Rotation eine Schraubrotation ist.

6. System (1000) zum Druckbeaufschlagen und Laden/Entladen einer Batteriezelle nach Anspruch 1, wobei der Druckbeaufschlagungsblock (150) dazu eingerichtet ist, eine Anschlusslasche (160, 180) der Batteriezelle (30, 30s) zu greifen.

7. System (1000) zum Druckbeaufschlagen und Laden/Entladen einer Batteriezelle nach Anspruch 6, wobei die Batteriezelle (30, 30s) eine beidseitig mit Anschlusslaschen versehene Batteriezelle ist, bei der Anschlusslaschen (160, 180) an beiden Enden bereitgestellt sind.

8. System (1000) zum Druckbeaufschlagen und Laden/Entladen einer Batteriezelle nach Anspruch 6, wobei die Batteriezelle (30, 30s) eine einseitig mit Anschlusslaschen versehene Batteriezelle (30, 30s) ist, die eine Anschlusslasche (160, 180) aufweist, die nur an einem Ende bereitgestellt ist.

9. System (1000) zum Druckbeaufschlagen und Laden/Entladen einer Batteriezelle nach Anspruch 6, wobei zwei oder mehr Druckbeaufschlagungsblöcke (150-152) auf der einen Platte (100, 110) angeordnet sind.

10. System (1000) zum Druckbeaufschlagen und Laden/Entladen einer Batteriezelle nach Anspruch 1, ferner umfassend:
eine Transfervorrichtung zum Transferieren des Außenrahmens (20); und
eine Lade-/Entladevorrichtung, in welche der transferierte Außenrahmen (20) einsetzbar ist,
wobei die Lade-/Entladevorrichtung eine äußere Anschlusslasche (180) aufweist, die elektrisch mit der inneren Anschlusslasche (160) verbunden ist, und
wobei ein durch die Lade-/Entladevorrichtung angelegter Strom über die äußere Anschlusslasche (180), die innere Anschlusslasche (160) und den Druckbeaufschlagungsblock (150) zu der Batteriezelle (30, 30s) übertragbar ist.

11. System (1000) zum Druckbeaufschlagen und Laden/Entladen einer Batteriezelle nach Anspruch 10, wobei die äußere Anschlusslasche (180) ein Anschlusslaschengreifer ist, der die innere Anschlusslasche (160) greift und elektrisch verbindet.

## Revendications

1. Système (1000) de mise sous pression et de charge/décharge d'un élément de batterie (30, 30s), comportant :
un cadre intérieur (10) dans lequel un élément de batterie (30, 30s) est chargé ; et
une plaque (100, 110) servant à mettre l'élément de batterie (30, 30s) sous pression, **caractérisé en ce que** le système (1000) comporte par ailleurs
un bloc de mise sous pression (150) mobile sur la plaque (100, 110) dans une direction dans laquelle la plaque (100, 110) s'étend, et saisissant l'élément de batterie (30, 30s) ; et
un cadre extérieur (20) disposé à l'extérieur du cadre intérieur (10) et ayant une languette intérieure (160) reliée électriquement au bloc de mise sous pression (150) par câblage et dans lequel le câblage (170) connecte la languette intérieure (160) au bloc de mise sous pression (150) sous la forme d'un ressort.

2. Système de mise sous pression et de charge/décharge d'élément de batterie (1000) selon la revendication 1, dans lequel le bloc de mise sous pression (150) comporte une carte de circuit imprimé disposée dans une partie en contact avec l'élément de batterie (30, 30s).

3. Système de mise sous pression et de charge/décharge d'élément de batterie (1000) selon la revendication 1, comportant par ailleurs une cellule de charge (140) disposée à l'intérieur du cadre intérieur (10) et en mesure de mesurer une pression exercée sur l'élément de batterie (30, 30s).

4. Système de mise sous pression et de charge/décharge d'élément de batterie (1000) selon la revendication 1, comportant par ailleurs un arbre de mise sous pression (120) pour mettre la plaque (100, 110) sous pression, dans lequel l'arbre de mise sous pression (120) met la plaque (100, 110) sous pression par rotation.

5. Système de mise sous pression et de charge/décharge d'élément de batterie (1000) selon la revendication 4, dans lequel la rotation est une rotation de vis.

6. Système de mise sous pression et de charge/décharge d'élément de batterie (1000) selon la revendication 1, dans lequel le bloc de mise sous pression (150) saisit la languette (160, 180) de l'élément de batterie (30, 30s).

7. Système de mise sous pression et de charge/décharge d'élément de batterie (1000) selon la revendication 6, dans lequel l'élément de batterie (30, 30s) est un élément de batterie à languettes bilatérales avec des languettes (160, 180) mises en œuvre aux deux extrémités.

8. Système de mise sous pression et de charge/décharge d'élément de batterie (1000) selon la revendication 6, dans lequel l'élément de batterie (30, 30s) est un élément de batterie à languettes unidirectionnelles (30, 30s) ayant une languette (160, 180) mise en œuvre à une extrémité seulement.

9. Système de mise sous pression et de charge/décharge d'élément de batterie (1000) selon la revendication 6, dans lequel deux blocs de mise sous pression ou plus (150-152) sont disposés sur ladite une plaque (100, 110).

10. Système de mise sous pression et de charge/décharge d'élément de batterie (1000) selon la revendication 1, comportant par ailleurs :
un dispositif de transfert servant à transférer le cadre extérieur (20) ; et
un dispositif de charge/décharge dans lequel le cadre extérieur transféré (20) est placé,
dans lequel le dispositif de charge/décharge a une languette extérieure (180) connectée électriquement à la languette intérieure (160), et
dans lequel un courant appliqué par le dispositif de charge/décharge est transféré à l'élément de batterie (30, 30s) par le biais de la languette extérieure (180), de la languette intérieure (160) et du bloc de mise sous pression (150).

11. Système de mise sous pression et de charge/décharge d'élément de batterie (1000) selon la revendication 10, dans lequel la languette extérieure (180) est une pince de languette qui saisit et connecte électriquement la languette intérieure (160).
